# EUROPEAN PATENT SPECIFICATION

(11) **EP 1 425 875 B1**
(45) Date of publication and mention of the grant of the patent: **21.06.2006**
(21) Application number: 02747587.0
(22) Date of filing: 23.07.2002
(51) Int. Cl.: H04L 9/32

(54) **DIGITAL TIME STAMPING SYSTEM**
DIGITALES ZEITSTEMPEL SYSTEM
SYSTEME HORODATEUR NUMERIQUE

(30) Priority: 13.09.2001 GB 0122169
(43) Date of publication of application: 09.06.2004
(73) Proprietor: Ncipher Corporation Limited, Cambridge CB1 2JD (GB)
(72) Inventor: HARVEY, Ian Nigel, Fenditton Cambridge CB5 8TE (GB)
(74) Representative: Maggs, Michael Norman
(86) International application number: PCT/GB2002/003357
(87) International publication number: WO 2003/024018

(56) References cited:
- EP-A- 0 898 216
- EP-A- 0 940 945
- EP-B- 0 328 232
- US-A- 5 136 647
- US-A- 5 422 953
- US-A1- 2001 002 485

## Description

The present invention relates to digital time stamping systems.

Digital time stamping systems are typically used for applying time stamps on messages or documents by means of a cryptographic digital signature as disclosed in US 5136647, EP 0328232 and US 2001/0002485. A typical implementation uses a local time source to determine the time along with hardware which implements a digital signature algorithm and which stores a key for that algorithm as disclosed in US 5422953.

In general, the digital signatures used for time stamps are created using a public key algorithm. This has the property that the key (the public key) used to check the signature is not the same as the key (the private key) used to produce it. This means that anyone can check that the time-stamp is correct, but only the holder of the private key can issue the time stamps.

Unfortunately, public-key algorithms are mathematically complex and take a lot of time to compute. This means that any one time-stamp issuing device can only issue a small number of time-stamps per second. Obviously, in many situations a time-stamp must be issued swiftly and a processing delay could render the stamp useless.

A conventional approach to this situation is to employ multiple time-stamping devices, so that many requests for time-stamps can be split amongst the different devices. However, this immediately creates another problem: one major use of timestamps is to establish the sequence of events (did the seller change his stock price before or after the buyer committed to buy?). If the time-stamps on these events are generated by different devices, the sequence can only be guaranteed if their clocks are exactly in synchronisation. Synchronising clocks is, in general, a different activity, and as more timestamps per second are required:
(a) the number of devices needing synchronisation goes up, and;
(b) they must all be synchronised to a greater accuracy (i.e. less than the smallest gap between events which need sequencing).

It is one object of the present invention at least to alleviate these difficulties. It is a further object to provide a high speed, but secure, digital time-stamping system.

According to the present invention there is provided a digital time-stamping system comprising:
(a) a first signature generator for receiving an incoming message, combining the message with time of arrival information, and digitally signing it to create a temporary signed message;
(b) a signature verifier for verifying the signature of the temporary signed message; and
(c) a second signature generator for creating, where authorised to do so by the signature verifier, an output time-stamped message by digitally signing a combination of the message and the time of arrival information.

Preferably, the first signature generator uses a cryptographic Message Authentication Code (MAC). This a type of signature where the signer of the message, and the verifier of the message, both use the same key. Although MACs do not have the desirable property that anyone can verify the signature, they are several orders of magnitude faster to compute than a public key signature algorithm. In the preferred embodiment, a fast MAC is used to bind a time stamp to a message, and which is later on converted to a public key signature.

Preferably, the system may include a first secure area, for example a hardware module, containing the first signature generator, and/or a second secure area (for example a hardware module) containing the signature verifier. The second module may also include the public key signature generator. Secure key stores may be provided in both areas/modules, the first for storing the key needed to generate the temporary signed message, and the second key needed to verify it. Preferably, those keys are the same, as for example where a MAC is used to create the temporary signed message. Where provided, the second key store may also contain the key or keys needed by the second signature generator, and to that end the second signature generator is also preferably contained within the second secure area.

The second key may comprise the private part of a public/private key pair, as used by any convenient public key cryptosystem such as RSA.

A plurality of second secure areas or modules may be provided, with a load balancer being used to spread the load between the modules. The load balancer may, but need not, be contained within the cryptographically secure boundaries of the first and/or second secure areas.

According to a second aspect of the present invention there is provided a method of digital time-stamping comprising:
(a) receiving an incoming message, combining the message with time of arrival information and digitally signing it to create a temporary signed message;
(b) verifying the signature of the temporary signed message; and
(c) where the verification is successful, creating an output time-stamped message by digitally signing a combination of the message and the time of arrival information.

The invention further extends to a computer program for implementing the above method, and to a computer-readable media on which such a computer program is stored.

The invention may be carried into practice in a number of ways and one specific embodiment will now be described, by way of example, with reference to the accompanying drawings, in which:
Figure 1 is a block diagram of the preferred embodiment; and
Figure 2 illustrates the operation of MAC generator.

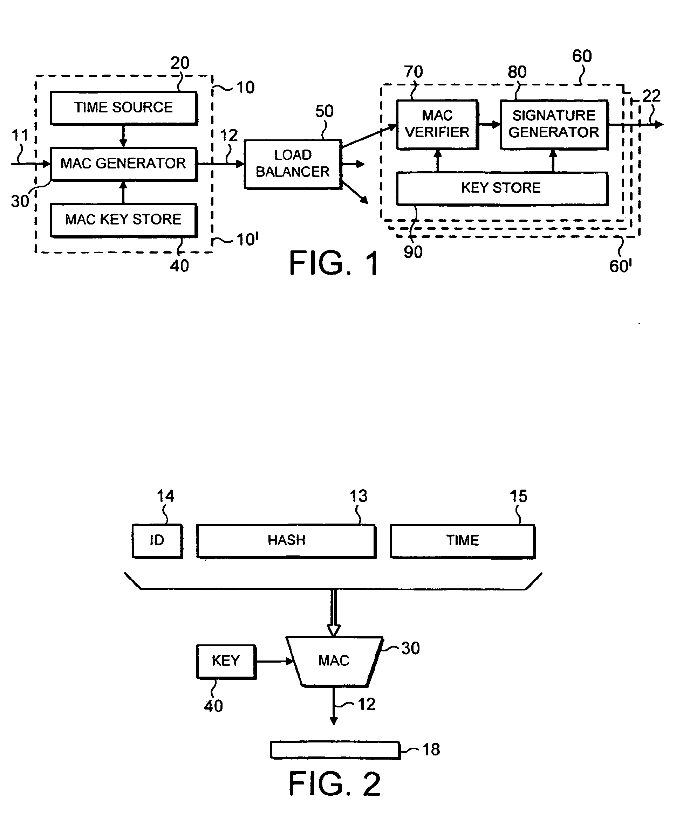

The system of the preferred embodiment, as illustrated schematically in Figure 1, consists of a front end unit 10, a load balancer 50, and one or more public key signature units 60. The front end rapidly signs incoming messages with a temporary time stamped signature, and these are then passed on by the load balancer to the public key signature units which verify the temporary signatures and resign the original messages with a public key.

The front end unit 10 contains a time source 20, a MAC generator 30 and a MAC key store 40. Incoming messages to be time-stamped arrive at an input 11, are stamped by the MAC generator 30, and are then passed via an output 12 to the load balancer 50. The MAC generator can use any convenient standard MAC (Message Authentication Code), including HMAC (Hash MAC) or CBC MAC (Block-cipher MAC).

The operation of the MAC generator 30 is shown in more detail in Figure 2. The incoming message to be time-stamped will typically include a hash 13 of a document, along with a unique header or ID 14. If no header is provided, that may be generated automatically by the front end unit 10. It will be understood, of course, that the principle of operation of the system does not depend upon the type of message to be signed: in appropriate circumstances, the hash 13 could be replaced with some other data uniquely indicative of the document to be signed, or could indeed be an electronic copy of the document in its entirety.

The ID 14, the hash 13 and a time 15 generated by the time source 20 are concatenated as indicated by the reference numeral 16, and are fed into the MAC generator 30. This uses the appropriate key from the key store 40 to generate a temporary time-stamped message 18 at the output 12.

Because MACs can be generated extremely rapidly, incoming messages can be dealt with promptly and passed on without delay to the load balancer. At the load balancer, the temporary time-stamped messages 18 may be queued if necessary and passed on to the public key signature units 60 at a rate they can handle. If the final time-stamps are not required particularly quickly, so that a single signature unit could eventually "catch up" on the workload, the load balancer 50 may simply make use of a single queue. Alternatively, several signature units 60 may be used, with the load balancer sharing out the workload between them.

The signature units 60 are responsible for converting the temporary time-stamped messages 18 into public key time-stamped messages which can then be output on one or more outputs 22. Conveniently, messages appearing on the output or outputs 22 will then be sent to a central store (not shown) from where they can be publicly accessed in the normal way.

Each signature unit 60 contains a secure key store 90, a MAC verifier 70 and a signature generator 80.

When a temporary time-stamped message arrives it is passed to the MAC verifier 70 which checks the MAC using a copy of the original MAC key, stored in the key store 90. If this verification fails, it is assumed that the message has been tampered with, and the request is discarded. Otherwise, the time of arrival at the front end unit, as indicated by the time string 15, is genuine, and the ID 14, hash 13 and time 15 are passed to the signature generator 80. This applies a public key signature using an appropriate public key, retrieved from the key store 90 to generate the finished time-stamped message. Any type of public key cryptosystem could be used to generate the final signature, such as RSA.

Since the same MAC keys are used both by the front end unit and the public key signature units, it is preferred that those keys are stored in a secure manner. In the preferred embodiment, the front end unit 10 and each of the public key signature units 60 comprise secure hardware modules, the security perimeters of which are illustrated by the dotted lines in Figure 1. The secure area for the front end unit is illustrated by the dotted lines 10', and the secure area for the public key signature units are illustrated by the dotted lines 60'. The keys stored within these units cannot be extracted, deleted or modified in any way without the user presenting appropriate security credentials.

In such an arrangement, the load balancer 50 is outside the security boundaries: that does not pose a security threat since all of the messages which pass outside the secure area are MAC protected, and cannot be modified by any third party who does not have access to the securely-stored MAC keys.

The front end unit, the load balancer and the public key signature units may but need not be located physically within the same computer. Since the MAC encoded messages do not need to be kept within a secure environment, the front end unit, the load balancer and the public key signature units could be widely separated physically, and could even be in different continents. Message passing between the front end unit and the load balancer, and between the load balancer and the public key signature units, could be via any convenient communications medium including a wired or wireless network, or the internet.

Alternatively, in a variant of the embodiment, all of the elements shown in Figure 1 could be contained within a single secure hardware module, having just a single input 11 and a single output 22.

## Claims

1. A digital time-stamping system comprising:
(a) a first signature generator (30) for receiving an incoming message, combining the message (13) with time of arrival information (15), and digitally signing it to create a temporary signed message (18);
(b) a signature verifier (70) for verifying the signature of the temporary signed message (18); and **characterized by**
(c) a second signature generator (80) for creating, where authorised to do so by the signature verifier, an output time-stamped message by digitally signing a combination of the message (13) and the time of arrival information (15).

2. A digital time-stamping system as claimed in claim 1 in which the first signature generator (30) digitally signs using a cryptographic Message Authentication Code.

3. A digital time-stamping system as claimed in claim 1 or claim 2 in which the second signature generator (80) digitally signs using a cryptographic public key system.

4. A digital time-stamping system as claimed in any one of the preceding claims including a load balancer (50) for receiving and holding the temporary signed message (18) and for passing it on to the signature verifier (70).

5. A digital time-stamping system as claimed in claim 4 in which the load balancer includes a temporary message queue.

6. A digital time-stamping system as claimed in claim 4 or claim 5 including a plurality of signature verifiers (70) and corresponding second signature generators (80), the load balancer (50) controlling message transmission to the respective signature verifiers.

7. A digital time-stamping system as claimed in any one of the preceding claims in which the first signature generator (30) uses a first key to create the temporary signed message and the signature verifier (70) uses a copy of the first key to verify the signature.

8. A digital time-stamping system as claimed in claim 7 in which the first key and the copy of the first key are both securely stored.

9. A digital time-stamping system as claimed in claims 1 to 6 in which the first signature generator (30) is contained within a first secure area (10').

10. A digital time-stamping system as claimed in claim 9 in which the first secure area (10') is a secure first hardware module.

11. A digital time-stamping system as claimed in claim 9 or claim 10 in which the first secure area (10') contains a first key store (40) which holds a first key used by the first signature generator (30) to create the temporary signed message.

12. A digital time-stamping system as claimed in claims 9 to 11 in which the first secure area (10') includes a time source (20) for generating the time of arrival information (15).

13. A digital time-stamping system as claimed in any one of claims 1 to 6 or any one of claims 9 to 12 in which the signature verifier (70) is contained within a second secure area (60').

14. A digital time-stamping system as claimed in claim 13 in which the second secure area (60') is a second secure hardware module.

15. A digital time-stamping system as claimed in claim 13 or claim 14 when dependent upon claim 11 in which the second secure area (60') includes a second key storage (90) which holds a copy of the first key for use by the signature verifier (70) to verify the signature of the temporary signed message (18).

16. A digital time-stamping system as claimed in claim 13 or claim 14 in which the second signature generator (80) is contained within the second secure area (60').

17. A digital time-stamping system as claimed in claim 16 in which the second secure area (60') includes a second key store (90) which holds a second key for use by the second signature generator (80) to create the output time stamped message.

18. A digital time-stamping system as claimed in claim 1 including a first secure area (10') containing the first signature generator (30) and a second secure area (60') containing the signature verifier (70).

19. A digital time-stamping system as claimed in claim 18 in which the first (10) and second (60') secure areas comprise respective first and second secure hardware modules.

20. A digital time-stamping system as claimed in claim 18 or claim 19 in which the first signature generator (30) uses a first key stored within the first secure area (10) and the signature verifier (70) uses a copy of the first key stored in the second secure area (60').

21. A digital time-stamping system as claimed in claims 18 to 20 including a load balancer (50) for receiving and holding the temporary signed message (18) and for passing it on to the second secure area (60'), the load balancer being outside both the first (10') and second (60') secure areas.

22. A digital time-stamping system as claimed in claim 21 including a plurality of second secure areas (60') each containing a respective signature verifier (70), the load balancer (50) controlling message transmission to the second secure areas.

23. A digital time-stamping system as claimed in claim 18 in which the temporary signed message passes out of the first secure area (10') on its way to the second secure area (60').

24. A digital time-stamping system as claimed in claim 1 including a time source (20) for generating the time of arrival information (15).

25. A method of digital time-stamping comprising:
(a) receiving an incoming message, combining the message (13) with time of arrival information (15), and digitally signing it to create a temporary signed message (18);
(b) verifying the signature of the temporary signed message (18); and **characterized by**
(c) where the verification is successful, creating an output time-stamped message by digitally signing a combination of the message (13) and the time of arrival information (15).

26. A computer program comprising computer code to, when loaded into a computer system and executed, cause said computer system to perform the following steps
(a) receiving an incoming message, combining the message (13) with time of arrival information (15), and digitally signing it to create a temporary signed message (18);
(b) verifying the signature of the temporary signed message (18); and **characterized by**
(c) where the verification is successful, creating an output time-stamped message by digitally signing a combination of the message (13) and the time of arrival information (15).

27. A computer-readable media that stores instructions which will cause at least a portion of a computer system to perform the following steps:
(a) receiving an incoming message, combining the message (13) with time of arrival information (15), and digitally signing it to create a temporary signed message (18);
(b) verifying the signature of the temporary signed message (18); and **characterized by**
(c) where the verification is successful, creating an output time-stamped message by digitally signing a combination of the message (13) and the time of arrival information (15).

## Patentansprüche

1. Digitales Zeitstempelsystem welches aufweist:
(a) einen ersten Signaturgenerator (30), zum Empfangen einer eingehenden Nachricht, zum Vereinigen der Nachricht (13) mit Ankunftszeit-Informationen (15) und zum digitalen signieren der Nachricht, um eine vorläufige signierte Nachricht (18) zu erzeugen;
(b) einen Signatur-Verifizierer (70) zum Verifizieren der Signatur der vorläufig signierten Nachricht (18); und **gekennzeichnet durch**
(c) einen zweiten Signaturgenerator (80) zum Erzeugen, sofern er von dem Signatur-Verifizierer dazu autorisiert wurde, einer zeitgestempelten Ausgabenachricht, **durch** digitales Signieren einer Vereinigung von der Nachricht (13) und der Ankunftszeit-Information (15)

2. Digitales Zeitstempelsystem nach Anspruch 1 wobei der erste Signaturgenerator (30) unter Verwendung eines kryptographischen Nachrichten-Authentifizierungs-Codes digital signiert.

3. Digitales Zeitstempelsystem nach Anspruch 1 oder Anspruch 2, wobei der zweite Signaturgenerator (80) unter Verwendung eines kryptographischen Systems mit öffentlichem Schlüssel digital signiert.

4. Digitales Zeitstempelsystem nach einem der vorhergehenden Ansprüche, welches einen Belastungs-Ausgleicher (50) zum Empfangen und Aufbewahren der vorläufig signierten Nachricht (18) und zum Weiterleiten derselben an den Signatur-Verifizierer (70) aufweist.

5. Digitales Zeitstempelsystem nach Anspruch 4, wobei der Belastungs-Ausgleicher eine vorläufige Nachrichten-Warteschlange beinhaltet.

6. Digitales Zeitstempelsystem nach Anspruch 4 oder 5, welches eine Vielzahl von Signatur-Verifizierern (70) und korrespondierende zweiter Signaturgeneratoren (80) beinhaltet, wobei der Belastungs-Ausgleicher (50) die Nachrichtenübermittlung zu den entsprechenden Signatur-Verifizierern steuert.

7. Digitales Zeitstempelsystem nach einem der vorhergehenden Ansprüche, wobei der erste Signaturgenerator (30) einen ersten Schlüssel verwendet, um die vorläufig signierte Nachricht zu erzeugen und der Signatur-Verifizierer (70) eine Kopie des ersten Schlüssels verwendet, um die Signatur zu Verifizieren.

8. Digitales Zeitstempelsystem nach Anspruch 7, wobei der erste Schlüssel und die Kopie des ersten Schlüssels beide sicher verwahrt sind.

9. Digitales Zeitstempelsystem nach Anspruch 1 bis 6, wobei der erste Signaturgenerator (30) sich innerhalb eines ersten sicheren Bereichs (10') befindet.

10. Digitales Zeitstempelsystem nach Anspruch 9, wobei der erste sichere Bereich (10') ein sicheres erstes Hardwaremodul ist.

11. Digitales Zeitstempelsystem nach Anspruch 9 oder Anspruch 10, wobei der erste sichere Bereich (10') einen ersten Schlüsselspeicher (40) enthält, welcher einen ersten Schlüssel bereithält, der von dem ersten Signaturgenerator (30) verwendet wird, um die vorläufige signierte Nachricht zu erzeugen.

12. Digitales Zeitstempelsystem nach Anspruch 9 bis 11, wobei der erste sichere Bereich (10') eine Zeitquelle (20) enthält, um die Ankunftszeit-Information (15) zu erzeugen.

13. Digitales Zeitstempelsystem nach einem der Ansprüche 1 bis 6 oder einem der Ansprüche 9 bis 12, wobei der Signatur-Verifizierer (70) sich innerhalb eines zweiten sicheren Bereichs (60') befindet.

14. Digitales Zeitstempelsystem nach Anspruch 13, wobei der zweite sichere Bereich (60') ein zweites sicheres Hardwaremodul ist.

15. Digitales Zeitstempelsystem nach Anspruch 13 oder Anspruch 14, sofern er von Anspruch 11 abhängig ist, wobei der zweite sichere Bereich (60') einen zweiten Schlüsselspeicher (90) enthält, welcher eine Kopie des ersten Schlüssels zur Verwendung durch den Signatur-Verifizierer (70) bereithält, um die Signatur der vorläufig signierten Nachricht (18) zu verifizieren.

16. Digitales Zeitstempelsystem nach Anspruch 13 oder 14, wobei der zweite Signaturgenerator (80) sich innerhalb des zweiten sicheren Bereichs (60') befindet.

17. Digitales Zeitstempelsystem nach Anspruch 16, wobei der zweite sichere Bereich (60') einen zweiten Schlüsselspeicher (90) enthält, welcher einen zweiten Schlüssel zur Verwendung durch den zweiten Signaturgenerator (80) bereithält, um die Zeitgestempelte Ausgabenachricht zu erzeugen.

18. Digitales Zeitstempelsystem nach Anspruch 1, welches einen ersten sicheren Bereich (10') enthält, in dem sich der erste Signaturgenerator (30) befindet, und einen zweiten sicheren Bereich (60') welcher den Signatur-Verifizierer (70) enthält.

19. Digitales Zeitstempelsystem nach Anspruch 18, wobei die ersten (10') und zweiten (60') sicheren Bereiche je erste und zweite sichere Hardwaremodule aufweisen.

20. Digitales Zeitstempelsystem nach Anspruch 18 oder Anspruch 19, wobei der erste Signaturgenerator (30) einen ersten Schlüssel verwendet, der innerhalb des ersten sicheren Bereichs (10') gespeichert ist und der Signatur-Verifizierer (70) eine Kopie des ersten Schlüssels verwendet, die in dem zweiten sicheren Bereich (60') gespeichert ist.

21. Digitales Zeitstempelsystem nach den Ansprüchen 18 bis 20 welches einen Belastungs-Ausgleicher (50) beinhaltet, zum Empfangen und Bereithalten der vorläufig signierten Nachricht (18) und um diese zu dem zweiten sicheren Bereich (60') weiterzugeben, wobei sich der Belastungs-Ausgleicher außerhalb von sowohl dem ersten (10'), als auch dem zweiten (60') sicheren Bereich befindet.

22. Digitales Zeitstempelsystem nach Anspruch 21, welches eine Vielzahl von zweiten sicheren Bereichen (60') beinhaltet, wobei jeder einen entsprechenden Signatur-Verifizierer (70) beinhaltet, wobei der Belastungs-Ausgleicher (50) die Nachrichtenübermittlung zu den zweiten sicheren Bereichen steuert.

23. Digitales Zeitstempelsystem nach Anspruch 18, wobei die vorläufige signierte Nachricht auf ihrem Weg zu dem zweiten sicheren Bereich (60') aus dem ersten sicheren Bereich (10') heraustritt.

24. Digitales Zeitstempelsystem nach Anspruch 1, welches eine Zeitquelle (20) zur Erstellung der Ankunftszeit-Information (15) beinhaltet.

25. Verfahren zur digitalen Zeitstempelung, welches Aufweist:
(a) Empfangen einer eingehenden Nachricht, vereinigen der Nachricht (13) mit Ankunftszeit-Informationen (15), und digitales Signieren der Nachricht, um eine vorläufige signierte Nachricht (18) zu erzeugen;
(b) Verifizieren der Signatur der vorläufigen signierten Nachricht (18); und **gekennzeichnet durch**
(c) sofern die Verifizierung erfolgreich ist, erzeugen einer zeitgestempelten Ausgabenachricht **durch** digitales Signieren einer Vereinigung von der Nachricht (13) und der Ankunftszeit-Informationen (15).

26. Computerprogramm, welches Computercode aufweist, um, wenn es in ein Computersystem geladen und ausgeführt wird, das Computersystem zu veranlassen, die folgenden Schritte auszuführen:
(a) Empfangen einer eingehenden Nachricht, vereinigen der Nachricht (13) mit Ankunftszeit-Informationen (15), und digitales Signieren der Nachricht, um eine vorläufige signierte Nachricht (18) zu erzeugen;
(b) Verifizieren der Signatur der vorläufigen signierten Nachricht (18); und **gekennzeichnet durch**
(c) sofern die Verifizierung erfolgreich ist, erzeugen einer zeitgestempelten Ausgabenachricht **durch** digitales Signieren einer Vereinigung von der Nachricht (13) und der Ankunftszeit-Informationen (15).

27. Computerlesbares Medium, welches Anweisungen speichert, die zumindest einen Teil eines Computersystems veranlassen werden, die folgenden Schritte auszuführen:
(a) Empfangen einer eingehenden Nachricht, vereinigen der Nachricht (13) mit Ankunftszeit-Informationen (15), und digitales Signieren der Nachricht, um eine vorläufige signierte Nachricht (18) zu erzeugen;
(b) Verifizieren der Signatur der vorläufigen signierten Nachricht (18); und **gekennzeichnet durch**
(c) sofern die Verifizierung erfolgreich ist, erzeugen einer zeitgestempelten Ausgabenachricht **durch** digitales Signieren einer Vereinigung von der Nachricht (13) und der Ankunftszeit-Informationen (15).

## Revendications

1. Système d'horodatage numérique comprenant :
(a) un premier générateur de signature (30) pour recevoir un message entrant, combiner le message (13) à des informations concernant l'heure d'arrivée (15) et le signer numériquement pour créer un message signé temporaire (18) ;
(b) un vérificateur de signature (70) pour vérifier la signature du message signé temporaire (18), et **caractérisé par**
(c) un deuxième générateur de signature (80) pour créer, une fois autorisé à le faire par le vérificateur de signature, un message horodaté de sortie en signant numériquement une combinaison du message (13) et des informations concernant l'heure d'arrivée (15).

2. Système d'horodatage numérique suivant la revendication 1, dans lequel le premier générateur de signature (30) signe numériquement en utilisant un code d'authentification de message cryptographique.

3. Système d'horodatage numérique suivant la revendication 1 ou 2, dans lequel le deuxième générateur de signature (80) signe numériquement en utilisant un système cryptographique à clé publique.

4. Système d'horodatage numérique suivant l'une quelconque des revendications précédentes, comprenant un équilibreur de charge (50) pour recevoir et conserver le message signé temporaire (18) et pour le transmettre au vérificateur de signature (70).

5. Système d'horodatage numérique suivant la revendication 4, dans lequel l'équilibreur de charge comprend une file d'attente de messages temporaires.

6. Système d'horodatage numérique suivant la revendication 4 ou 5, comprenant une pluralité de vérificateurs de signature (70) et des deuxièmes générateurs de signature (80) correspondants, l'équilibreur de charge (50) commandant la transmission de messages aux vérificateurs de signature respectifs.

7. Système d'horodatage numérique suivant l'une quelconque des revendications précédentes, dans lequel le premier générateur de signature (30) utilise une première clé pour créer le message signé temporaire et le vérificateur de signature (70) utilise une copie de la première clé pour vérifier la signature.

8. Système d'horodatage numérique suivant la revendication 7, dans lequel la première clé et la copie de la première clé sont toutes deux stockées de manière sécurisée.

9. Système d'horodatage numérique suivant l'une quelconque des revendications 1 à 6, dans lequel le premier générateur de signature (30) est contenu dans une première zone sécurisée (10').

10. Système d'horodatage numérique suivant la revendication 9, dans lequel la première zone sécurisée (10') est un premier module matériel sécurisé.

11. Système d'horodatage numérique suivant la revendication 9 ou 10, dans lequel la première zone sécurisée (10') contient une première mémoire de clé (40) qui contient une première clé utilisée par le premier générateur de signature (30) pour créer le message signé temporaire.

12. Système d'horodatage numérique suivant l'une quelconque des revendications 9 à 11, dans lequel la première zone sécurisée (10') comprend une source temporelle (20) pour générer les informations concernant l'heure d'arrivée (15).

13. Système d'horodatage numérique suivant l'une quelconque des revendications 1 à 6 ou 9 à 12, dans lequel le vérificateur de signature (70) est contenu dans une deuxième zone sécurisée (60').

14. Système d'horodatage numérique suivant la revendication 13, dans lequel la deuxième zone sécurisée (60') est un deuxième module matériel sécurisé.

15. Système d'horodatage numérique suivant la revendication 13 ou 14 lorsqu'elle dépend de la revendication 11, dans lequel la deuxième zone sécurisée (60') comprend une deuxième mémoire de clé (90) qui contient une copie de la première clé destinée à être utilisée par le vérificateur de signature (70) pour vérifier la signature du message signé temporaire (18).

16. Système d'horodatage numérique suivant la revendication 13 ou 14, dans lequel le deuxième générateur de signature (80) est contenu dans la deuxième zone sécurisée (60').

17. Système d'horodatage numérique suivant la revendication 16, dans lequel la deuxième zone sécurisée (60') comprend une deuxième mémoire de clé (90) qui contient une deuxième clé destinée à être utilisée par le deuxième générateur de signature (80) pour créer le message horodaté de sortie.

18. Système d'horodatage numérique suivant la revendication 1, comprenant une première zone sécurisée (10') contenant le premier générateur de signature (30) et une deuxième zone sécurisée (60') contenant le vérificateur de signature (70).

19. Système d'horodatage numérique suivant la revendication 18, dans lequel la première (10') et la deuxième (60') zones sécurisées comprennent un premier et un deuxième modules matériels sécurisés respectifs.

20. Système d'horodatage numérique suivant la revendication 18 ou 19, dans lequel le premier générateur de signature (30) utilise une première clé stockée dans la première zone' sécurisée (10') et le vérificateur de signature (70) utilise une copie de la première clé stockée dans la deuxième zone sécurisée (60').

21. Système d'horodatage numérique suivant l'une quelconque des revendications 18 à 20, comprenant un équilibreur de charge (50) pour recevoir et conserver le message signé temporaire (18) et pour le transmettre à la deuxième zone sécurisée (60'), l'équilibreur de charge se trouvant en dehors de la première (10') et de la deuxième (60') zones sécurisées.

22. Système d'horodatage numérique suivant la revendication 21, comprenant une pluralité de deuxièmes zones sécurisées (60') contenant chacune un vérificateur de signature (70) respectif, l'équilibreur de charge (50) commandant la transmission de messages aux deuxièmes zones sécurisées.

23. Système d'horodatage numérique suivant la revendication 18, dans lequel le message signé temporaire passe hors de la première zone sécurisée (10') en route vers la deuxième zone sécurisée (60').

24. Système d'horodatage numérique suivant la revendication 1, comprenant une source temporelle (20) pour générer les informations concernant l'heure d'arrivée (15).

25. Procédé d'horodatage numérique comprenant :
(a) la réception d'un message entrant, la combinaison du message (13) à des informations concernant l'heure d'arrivée (15) et la signature numérique de celui-ci pour créer un message signé temporaire (18);
(b) la vérification de la signature du message signé temporaire (18), et **caractérisé par**
(c) lorsque la vérification est positive, la création d'un message horodaté de sortie en signant numériquement une combinaison du message (13) et des informations concernant l'heure d'arrivée (15).

26. Programme informatique comprenant un code informatique pour, lorsqu'il est chargé sur un système informatique et exécuté, amener ledit système informatique à exécuter les étapes suivantes :
(a) la réception d'un message entrant, la combinaison du message (13) à des informations concernant l'heure d'arrivée (15) et la signature numérique de celui-ci pour créer un message signé temporaire (18);
(b) la vérification de la signature du message signé temporaire (18), et **caractérisé par**
(c) lorsque la vérification est positive, la création d'un message horodaté de sortie en signant numériquement une combinaison du message (13) et des informations concernant l'heure d'arrivée (15).

27. Support lisible par ordinateur dans lequel sont stockées des instructions qui font qu'une partie au moins d'un système informatique exécute les étapes suivantes :
(a) la réception d'un message entrant, la combinaison du message (13) à des informations concernant l'heure d'arrivée (15) et la signature numérique de celui-ci pour créer un message signé temporaire (18) ;
(b) la vérification de la signature du message signé temporaire (18), et **caractérisé par**
(c) lorsque la vérification est positive, la création d'un message horodaté de sortie en signant numériquement une combinaison du message (13) et des informations concernant l'heure d'arrivée (15).
